Europäisches Patentamt

European Patent Office

Office européen des brevets

(11) Publication number: **0 290 690**
**A1**

# EUROPEAN PATENT APPLICATION

(21) Application number: **87304240.2**

(22) Date of filing: **13.05.87**

(51) Int. Cl.⁴: **F21V 8/00 , F21P 1/02**

(43) Date of publication of application:
**17.11.88 Bulletin 88/46**

(84) Designated Contracting States:
**AT DE ES FR GB IT NL SE**

(71) Applicant: **Chang, Ming**
**4th Floor, No. 92, Section 3, Shin-Sheng**
**North Road,**
**Taipei(TW)**

(72) Inventor: **Chang, Ming**
**4th Floor, No. 92, Section 3, Shin-Sheng**
**North Road,**
**Taipei(TW)**

(74) Representative: **Coxon, Philip et al**
**Eric Potter & Clarkson 14 Oxford Street**
**Nottingham NG1 5BP(GB)**

(54) **Optical fibre ornamented light set.**

(57) This invention is related to an optical fibre ornamented light set and in particular to one including a certain number of light with a lamp socket (1) at the bottom of each light. The lamp sockets (1) are connected in series with electric wire (13). Many optical fibre clusters (5) in various shapes consisted of optical fibre (5) are fitted on the lamp sockets (1). When the electricity goes along the electric wire (13) into the lamp socket (1), through the conductance of the spring leaves (14, 15) inside the lamp socket (1), the illuminating means (2) will glow. Radiance will shine through the top by the conductance of the optical electron of the optical fibre (5) so that when it is used for ornamenting the light set and matched with the bulb (2) colour, the light will emit various colourful radiance. Moreover, a transparent cover (51) is fitted to the surrounding of the optical fibre (5) for enhancing the colourful visual effects from the variations of the optical fibre (5) radiance as well as increasing the usage thereof.

F I G 1.

## OPTICAL FIBRE ORNAMENTED LIGHT SET

Although the conventional ornamented light set are various in kinds, yet all are confined in old styles; only the shape or pattern of bulbs is changed. Besides, the bulbs are exposed to the outside and will easily be prone to outside contacts. Aside from such major defect, with only outlook changes of bulbs and shapes and no further breakthroughs, these are really significant shortcomings. In view of such shortcomings, the inventor has created the concept of "optical fibre light set". It is intended to improve the aforesaid defects of the conventional light set in order to enhance the enjoyability on its colorful variations.

It is the chief objective of this invention to provide an improved optical fibre ornamented light set. A preferred light set according to the invention has hidden illuminating means in order to avoid exposure of the illuminating means and prevent damages from direct contacts of bumping, collecting and crushing, in addition, to enhance the colourful visual effects from the variations of optical fibre radiance.

A preferred light according to this invention provides a kind of optical fibre ornamented light set with a great many visual variations at the ends remote from the light source. Since the optical fibre is so thin and small, it can be formed in various shapes, like stars, bunch · of flowers, globules, crosses, numbers, characters, etc.

In addition, with varieties of bulb colours, the metamorphoses will be in an unpredictable way. Moreover, a transparent cover is conveniently fitted to surround the ends of the optical fibre in order to enhance the colourful visual effects from the variations of optical fibre radiance as well as increasing the usage thereof.

It is another objective of this invention to provide a kind of optical fibre ornamented light set series in simple way of use and easy change of positions. Preferably the styles and serial arrangement of a light set according to the invention can be selected at random according to personal preference simply by fixing the sheathing tube on the lamp socket with the tenons and it can easily be pulled out too.

A light set according to the invention is intended to eliminate defects of the conventional light set, It is further improved to provide a kind of optical fibre ornamented light set with simple structure, simple way of use and multiple variations.

In one aspect, the invention provides an optical fibre ornamented light set comprising:

a lamp socket formed of a hollow cylindrical body having two holes bored in opposite directions therethrough;

a concave grooved ring fitted surrounding inside of said lamp socket;

two spring leaves mounted in said lamp socket and in contact with positive and negative electrodes of an electric wire extending through the two holes of the lamp socket;

a sheathing tube having a smaller lower portion provided on the outer surface with two opposite projections, said sheathing tube being disposed within the lamp socket with the projections engaged with the concave grooved ring of the lamp socket;

illuminating means connected with the sheathing tube and in contact with the spring leaves;

a threaded ferrule threadedly received in an upper part of the sheathing tube and formed with an annular groove; and

a bunch of closely arranged cluster of optical fibres stuck together in a circular form being inserted into the sheathing tube.

In another aspect, the invention provides an ornamental light set comprising a socket adapted to mount an electrical light source in electrical connection with an electrical power supply to the socket characterised in that the socket further comprises means for interchangeably mounting an optical fibre set with input ends adjacent the light and outlet ends rranged at a remote location.

There now follows a detailed description to be read with reference to the accompanying drawings of light sets embodying the invention. It will be realised that these have been selected for description by way of example.

In the drawings:-

Figure 1 is an exploded view of a simple optical fibre ornamented light set embodying the present invention;

Figure 2 is a longitudinal sectional view of the single optical fibre ornamented light set of Figure 1;

Figure 3 is a sectional view showing the assembly of the single optical fibre ornamented light set; and

Figure 4 shows different embodiments of the present invention.

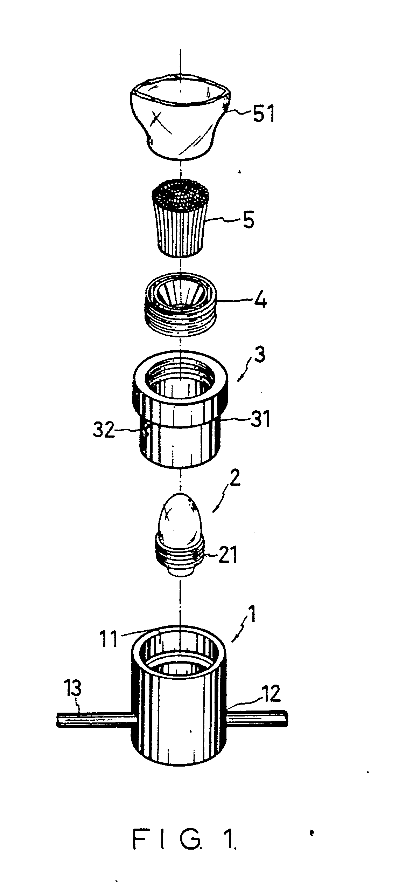

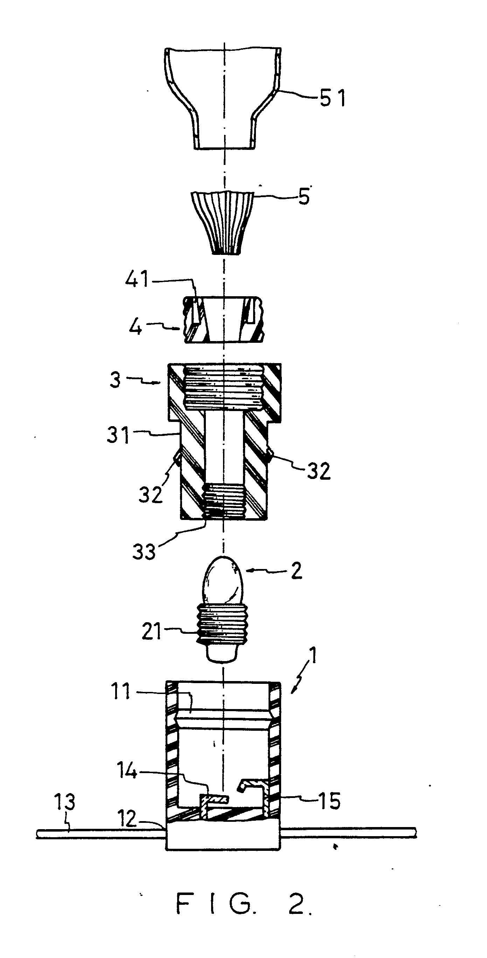

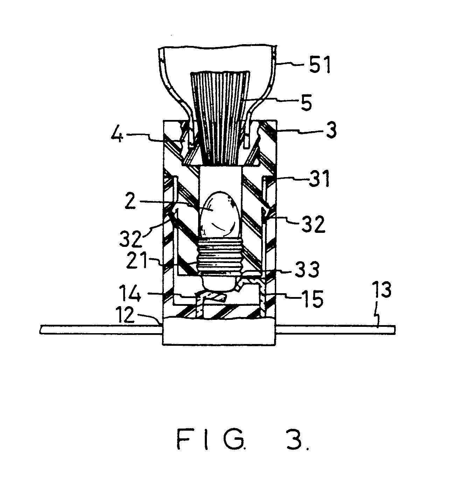

With reference now to the drawings and in particular to Figures 1 and 2 thereof, the optical fibre ornamented light set according to the present invention comprises a lamp socket 1 which is a hollow cylindrical body and may be modified according to the type and shape of the optical fibre. There is a concave grooved ring 11 fitted to the surrounding of the inside of the lamp socket 1. At the bottom of the lamp socket 1, holes 12 are bored in opposite directions through the cylindrical body so that the light set can be connected with an electric power supply by passing an electric wire 13 therethrough. Also, inside the lamp socket 1, there are two spring leaves 14 and 15 in contact with the positive and negative electrodes of the electric wire 13. A sheathing tube 3 having a smaller lower portion 31 on the outer surface of which there are two tenons 32 in opposite directions for securely fitting the sheathing tube 3 is disposed within the lamp socket 1 with the projections 32 engaged with the concave grooved ring 11 of the lamp socket 1. The inside wall of the lower portion 31 of the sheathing tube 3 is provided with threads 33 for meshing with threaded portion 21 of a bulb 2. The bulb 2 is fitted directly into the lamp socket 1 and in contact respectively with spring leaves 14 and 15 mounted in the lamp socket 1 (see Figure 3).

A threaded ferrule 4 is threadedly received in the upper part of the sheathing tube 3. The threaded ferrule 4 is formed with an annular groove 41 for receiving the lower part of a transparent cover 51. A bunch of closely arranged cluster of optical fibres 5 stuck together in a circular form is inserted into the sheating tube 3. It is noted that the transparent cover 51 is used as an ornamental member and also for increasing the life thereof. Also, the above-mentioned bulb 2 can be replaced by alternative illuminating means such as LED or the like. Furthermore, the light set can be supplied by either alternating current or direct current.

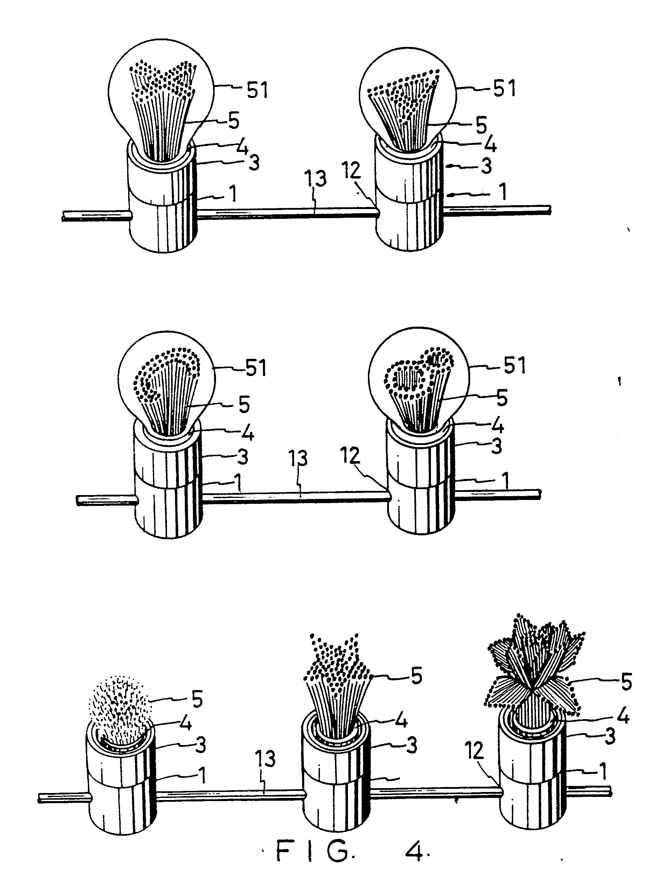

Based upon the above structural descriptions, application of this invention is in the state as shown in Figure 3. When electric power supply is connected to the electric wire 13, through the conductance of the spring leaves 14 and 15, the bulb 2 will emit radiance which will in turn be conducted by the optical fibres 5. As can be seen in Figure 4, the electric wire 13 is connected in series, one by one, through the holes 12 at the bottom of the lamp sockets 1 of each light. then, the bunches of optical fibres 5 are clustered in different formations matching to the colours of the bulbs 2 so that the radiance emitted from the bulbs will show various colourful sights through these optical fibres 5. Moreover, with so many changeable transformations of colourful sights will enhance the transformations of the ornamented light set. Such decorations may be applicable as ornaments on Christmas tree, and occasions of carnivals, wedding and other celebrating parties etc. However, the above descriptions of this invention are aimed at the demonstration of its applications. It is apparent that various modifications or renovations of concrete types of the light set can be made within the spirit of this invention.

## Claims

1. An optical fibre ornamented light set comprising:

a lamp socket formed of a hollow cylindrical body having two holes bored in opposite directions therethrough;

a concave grooved ring fitted surrounding inside of said lamp socket;

two spring leaves mounted in said lamp socket and in contact with positive and negative electrodes of an electric wire extending through the two holes of the lamp socket;

a sheathing tube having a smaller lower portion provided on the outer surface with two opposite projections, said sheathing tube being disposed within the lamp socket with the projections engaged with the concave grooved ring of the lamp socket;

illuminating means connected with the sheathing tube and in contact with the spring leaves;

a threaded ferrule threadedly received in an upper part of the sheathing tube and formed with an annular groove; and

a bunch of closely arranged cluster of optical fibres stuck together in a circular form being inserted into the sheathing tube.

2. An optical fibre ornamented light set according to Claim 1, further comprising a transparent cover the lower port of which is received in the annular groove of the ferrule.

3. An optical fibre ornamented light set according to Claim 1, characterised in that the illuminating means is a light bulb.

4. An optical fibre ornamented light set according to Claim 1, characterised in that said illuminating means is a light emitting diode.

5. An optical fibre ornamented light set according to Claim 1, characterised in that said ferrule is made of plastic.

6. An ornamental light set comprising a socket (1) adapted to mount an electrical light source (2) in electrical connection with an electrical power supply (13) to the socket (1) characterised in that the socket further comprises means (3, 4) for interchangeably mounting an optical fibre set (5) with input ends adjacent the light source (2) and outlet ends arranged at a remote location.

7. A light set according to Claim 6 characterised in that the outlet ends of the fibre set (5) are disposed in an ornamental pattern.

8. A light set according to either one of Claims 6 and 7 characterised in that the fibres (5) are relatively short.

9. A light set according to any one of Claims 6 to 8 characterised in that the set comprises a light transmitting cover (51) mounted on the socket (1), the outlet ends of the fibres (5) being enclosed within the cover (51).

10. A light set according to any one of Claims 6 to 9 characterised in that the means (3, 4) for interchangeably mounting the optical fibre set (5) comprises means (3, 21, 33, 11, 32) for mounting the light source (2) in a predetermined position and means (3, 4) for mounting the input ends of the fibre set (5) at a predetermined position relative to the light source (2).

51

5

4

3

31

32

2

21

1

11

13 12

F I G. 1.

51

5

41

4

3

31

32

32

33

2

21

1

11

14

15

13

12

F I G. 2.

FIG. 3.

0 290 690

FIG. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 085 940 (POLY-OPTICS)<br>* Whole document * | 1 | F 21 V   8/00<br>F 21 P   1/02 |
| A | | 3,5 | |
| X | | 6,10 | |
| | --- | | |
| Y | US-A-2 466 566 (TISCIONE)<br>* Figures 2-5 * | 1 | |
| | --- | | |
| A | US-A-3 564 231 (BRUCE)<br>* Figure 2 * | 1 | |
| | --- | | |
| A | GB-A-2 140 147 (KELLY)<br>* Figures 1-3 * | 2,8,9 | |
| | --- | | |
| A | FR-A-2 075 117 (GENERAL ELECTRIC)<br>* Figure 1 * | 4 | |
| | --- | | |
| A | FR-A-2 435 771 (MURAKAMI)<br>* Figure 3 * | 7 | |
| | ----- | | |
| | | | TECHNICAL FIELDS SEARCHED (Int. Cl.4)<br><br>F 21 V<br>F 21 P |

The present search report has been drawn up for all claims

| Place of search | Date of completion of the search | Examiner |
|---|---|---|
| THE HAGUE | 08-12-1987 | FOUCRAY R.B.F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 

& : member of the same patent family, corresponding
   document

EPO FORM 1503 03.82 (P0401)